# EUROPEAN PATENT APPLICATION

(11) **EP 1 732 321 A2**
(43) Date of publication of application: **13.12.2006**
(21) Application number: 06005620.7
(22) Date of filing: 20.03.2006
(51) Int. Cl.: H04N 7/14, H04M 1/02

(54) **Foldable wireless terminal for performing video communication and corresponding method**

(30) Priority: 07.06.2005 KR 2005048286
(71) Applicant: Samsung Electronics Co., Ltd., Yeongtong-gu Suwon-city, Gyeonggi-do 442-742 (KR)
(72) Inventor: Kim, Hwan, c/oSamsung Electronics Co., Ltd.,, Suwon-si, Gyeonggi-do (KR); Lim, Chae-Whan, c/oSamsung Electronics Co, Ltd, Suwon-si, Gyeonggi-do (KR)
(74) Representative: Lang, Johannes

(57) **Abstract**

A method and apparatus for performing communication in response to a video telephone call in a wireless terminal having a main body, and a folder pivotally mounted on said main body, are disclosed. Wireless terminal is switched to a first video communication mode either if a folder thereof is turned to a position to enable video communication or if communication key input is performed. Wireless terminal is switched to a second video communication mode to enable video data transmission either if video data transmission key input is performed with the folder turned to the position enabling video communication at the first video communication mode or if the folder is turned to the position enabling video communication with the communication key input performed at the first video communication mode.

## Description

### BACKGROUND OF THE INVENTION

### Field of the Invention

The present invention relates to a method of performing communication in response to a call in a wireless terminal such as cellular or mobile phone. More particularly the present invention relates to a method and apparatus where a cellular phone is switched to video communication mode in response to a video telephone call.

### Description of the related art

Presently, the wireless mobile phone is developed so as to have a structure to enable high-speed data transmission in addition to conventional voice communication. Namely, the mobile communications network according to IMT 2000 specifications may facilitate high-speed data communication in addition to voice communication with the wireless mobile terminal. The data transmitted through the wireless terminal in data communication may include packet data and video data. The wireless terminal has been also provided with a camera and TV receiver to add a video displaying function, so that it may display or transmit the moving or still pictures taken by the camera, and display received TV signals.

Thus, the wireless terminal having video communication function enables the user to transmit and receive video data together with audio data. Upon receiving a video telephone call, it is switched to video communication mode by performing communication key input, and then may transmit the user's video data to the caller by performing show-me key input.

### SUMMARY OF THE INVENTION

According to an aspect of the present invention, a method and apparatus for performing video communication in a wireless terminal are provided where the rotational position of the folder in response to a video telephone call is detected, and the wireless terminal is switched to a video communication mode if the rotational position of the folder represents a demand for a video communication.

According to another aspect of the present invention, a method and apparatus for performing video communication in a wireless terminal are provided where the rotational position of the folder in response to a video telephone call is detected, the wireless terminal is switched to a first video communication mode if the rotational position of the folder represents a demand for a video communication, and the wireless terminal is switched to a second video communication mode to enable video data transmission upon receiving a video transmission key input at the first video communication mode.

According to still another aspect of the present invention, a method and method for performing video communication in a wireless terminal are provided where a wireless terminal is switched to a first video communication mode upon receiving communication key input in response to a video telephone call, the rotational position of the folder at the first video communication mode is detected, and the wireless terminal is switched to a second video communication mode to enable video data transmission if the rotational position represents a demand for a video data transmission.

According to further another aspect of the present invention, a method and apparatus for performing video communication in a wireless terminal are provided where a rotational position of the folder or communication key input in response to a video telephone call is detected, a wireless terminal is switched to a first video communication mode either if the folder is turned to a position to enable video communication or if communication key input is performed, and the wireless terminal is switched to a second video communication mode to enable video data transmission either if video data transmission key input is performed with the folder turned to the position enabling video communication at the first video communication mode or if the folder is turned to the position enabling video communication with the communication key input performed at the first video communication mode.

### BRIEF DESCRIPTION OF THE ATTACHED DRAWINGS

Exemplary embodiments of the present invention will now be described more specifically with reference to the accompanying drawings in which like reference numerals will be understood to refer to like parts, components and structures, where:
Fig. 1 is a block diagram illustrating an example of a functional structure of a wireless terminal according to an exemplary embodiment of the present invention; and
Fig. 2 is a flow chart illustrating steps of an exemplary implementation of a method for performing video communication in response to a video telephone call in, for example, a wireless terminal as shown in Fig. 1.

### DETAILED DESCRIPTION OF EXEMPLARY EMBODIMENTS

Throughout descriptions in connection with the drawings, same reference numerals are used to represent same functional parts, as noted above. Detailed descriptions of known functions and configurations incorporated herein will be omitted for clarity and conciseness.

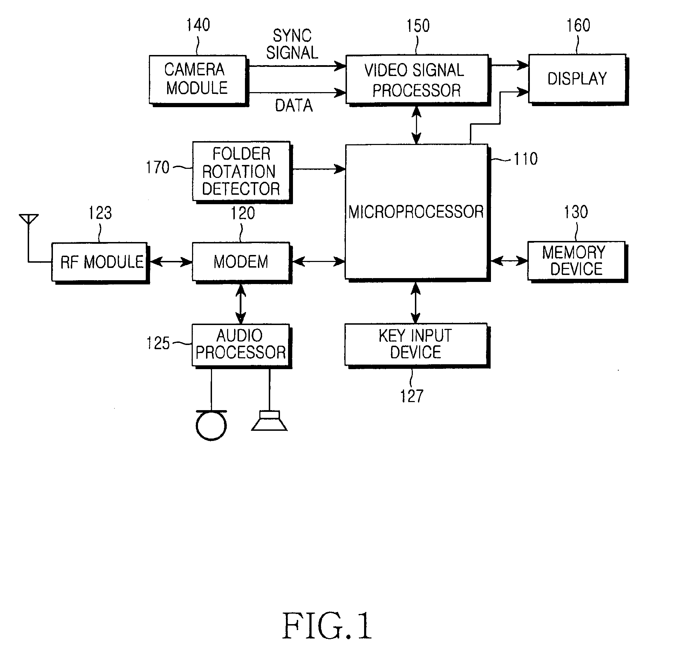

Referring to Fig. 1, an RF module 123 for wireless communication comprises an RF transmitter for modulating and amplifying the frequency of a transmitted signal and an RF receiver for demodulating and low-noise amplifying a received signal. A modem 120 is to transform the digital signals from a microprocessor 110 into the corresponding analog signals delivered to the RF module 123, or the analog signals from the RF module into the corresponding digital signals delivered to an audio processor 125 or the microprocessor 110. The audio processor 125 comprises a data codec for processing packet data and an audio codec for processing audio signals such as voice signals. The audio processor 125 converts the digital audio signals from the modem 120 into the corresponding analog signals delivered to a speaker, or the analog audio signals from a microphone into the corresponding digital signals delivered to the modem 120. The audio processor may be a separate unit or a built-in element of the microprocessor 110.

A memory device 130 comprises a program memory and a data memory. The program memory is to store the programs for controlling the general operations of the wireless terminal including the programs for controlling the automatic switching of the wireless terminal to the video communication mode or to the video data transmission mode according to the rotational position of the folder. Meanwhile, the data memory serves to temporarily store the data generated during execution of the programs.

The microprocessor 110 controls the whole functions of the wireless terminal, and may be designed so as to include the modem 120 and the audio processor. Turning the folder to a rotational position for automatically enabling video communication in response to a video telephone call, the microprocessor 110 controls the wireless terminal to be automatically switched to a first video communication mode. Here, we will define for the sake of convenience the rotational positions of the folder of the wireless terminal in reference to the main body as follows. Namely, the position at which the folder is arranged parallel with the main body is defined as a first lengthwise position, and the position at which the folder is arranged crosswise to the main body as a second crosswise position.

Accordingly the rotational position for automatically enabling the video communication is the second crosswise position detected by a folder rotation detector 170 to generate a position detection signal delivered to the microprocessor 110. According to an exemplary implementation of the rotational position of the folder, when the user turns the folder to the second crosswise position in response to the video telephone call, the wireless terminal enters first video communication mode to enable video reception together with audio reception and transmission. Then, in the first video communication mode, if video transmission key is inputted, the microprocessor 110 controls the wireless terminal to be switched to second video communication mode to enable video reception and transmission together with audio reception and transmission.

Alternatively, if the user performs communication key input in response to the video telephone call, the microprocessor 110 controls the wireless terminal to be switched to the first video communication mode with the folder maintained at the first lengthwise position. Then, turning the folder to the second crosswise position, the microprocessor 110 receives the second position detection signal from the folder rotation detector 170 to switch the wireless terminal to the second video communication mode.

Also provided is a camera module 140 which comprises a camera sensor for converting the optical signals of a captured image into the corresponding electrical signals, and a signal processor for converting the analog electrical signals from the camera sensor into the corresponding digital data. The camera sensor may be a CCD sensor, and the signal processor a DSP (Digital Signal Processor). The camera sensor and the signal processor may be integrally combined, or separately formed.

A video signal processor 150 processes the video signals from the camera module 140 by frames so as to generate the frame video data fitting the characteristics and size of a display 160. The video signal processor 150 includes a video codec to compress the frame video data or decompress the compressed frame video data according to a prescribed process. The video codec may be JPEG, MPEG4, Wavelet, etc. The video signal processor 150 is provided with the OSD (On Screen Display) function to generate the OSD data according to the screen size under the control of the microprocessor 110.

The display 160 displays both the video signals from the video signal processor 150 and the user's data transferred from the microprocessor 160. The display 160 may comprise an LCD device, LCD controller, and memory for storing the video data. The LCD device may be formed with the touch screen mode to serve as an input device. The display 160 also displays an automatic switching message to represent the first video communication mode automatically entered by turning the folder, or a video transmission message to represent the second video communication or transmission mode entered by turning the folder in the first video communication mode.

A key input device 127 includes the keys for inputting information on numbers and characters and the keys for setting various functions. According to an exemplary embodiment of the present invention, the folder rotation detector 170 detects the rotational position of the folder so as to generate a first or second position detection signal delivered to the microprocessor 110 according as the folder is in the first lengthwise or the second crosswise position.

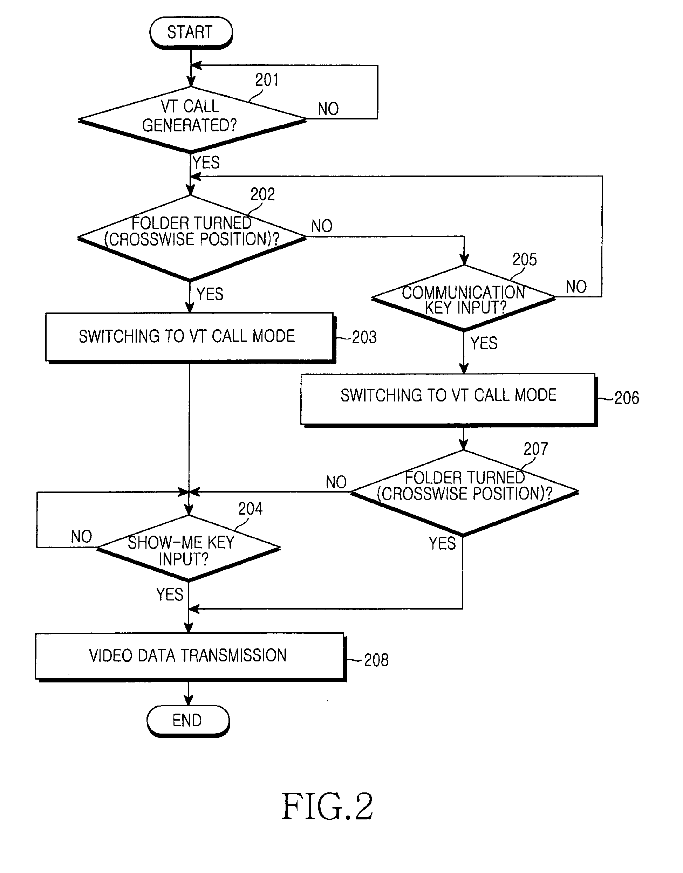

Hereinafter is described exemplary embodiments of the present invention for controlling the wireless terminal to be switched to the first video communication mode by turning the folder, or to the second video transmission mode by turning the folder in the first video communication mode, with reference to Fig. 2.

Referring to Fig. 2, if the wireless terminal receives a video telephone call (hereinafter referred to as VT call), the microprocessor 110 detects the received VT call in step 201 to stand by for the user's response to the VT call.

In step 202, when the user turns the folder, the folder rotation detector 170 determines the rotational position of the folder. If the folder is turned to the second crosswise position, the folder rotation detector 170 sends the second position detection signal to the microprocessor 110 to control the wireless terminal to be automatically switched to the first video communication mode in step 203. In this case, the microprocessor 110 also controls the display 160 to display the automatic switching message representing the first video communication mode for a predetermined time.

While performing the first video communication mode, if the user enters the show-me key to enable video data transmission, the microprocessor 110 controls in step 204 the wireless terminal to be switched to the second video communication mode to transmit the video data of, for example, the user's face image being taken by the camera module 140 in step 208.

Again, if the user returns the folder to the first lengthwise position during the second video communication mode in step 208, the folder rotation detector 170 generates the first position detection signal delivered to the microprocessor 110 to switch the wireless terminal to the voice communication mode allowing only the transmission and reception of voice signals.

Alternatively, if the user enters the communication key in response to a VT call, the microprocessor 110 controls in step 205 the wireless terminal to be switched to the first video communication mode allowing video reception, and audio reception and transmission in step 206. Then, in the first video communication mode, if the user turns the folder to the second crosswise position, the folder rotation detector 170 detects it in step 207 to send the second position detection signal to the microprocessor 110 to switch the wireless terminal to the second video communication mode in step 208, so that he can transmit the video data of his face image captured by the camera module 140 to the caller. In this case, the microprocessor 110 also controls the display 160 to display the automatic switching message representing the second video communication mode for a predetermined time.

Then, in the second video communication mode, if the user turns the folder to the first lengthwise position, the folder rotation detector 170 detects it to send the first position detection signal to the microprocessor 110 to switch the wireless terminal to the first vide communication mode blocking the user's video data transmission in step 206.

Thus, exemplary implementation of certain embodiments of the present invention enable a wireless terminal to be automatically switched to the first or second video communication mode by simply turning the folder, thereby providing the user of a video telephone with a more convenient operation.

While the present invention has been described in connection with certain exemplary embodiments, it will be readily apparent to those skilled in the art that various changes and modifications may be made thereto without departing from the spirit and scope of the present invention as defined in the appended claims and equivalents thereof.

## Claims

1. A method of performing video communications in a mobile communications terminal, the method comprising the steps of:
detecting a direction of rotation of a folder of a mobile communications terminal upon receipt of a video communication call; and
switching said mobile communications terminal to a video communication mode, if the detected direction of rotation of the folder is indicative of a position adapted for performing video communications on the mobile communications terminal.

2. The method as defined in Claim 1, wherein said position adapted for performing video communications on the mobile communications terminal comprises a position where said folder is rotated to a second folder mode, said second folder mode comprising a crosswise position of the folder with respect to a main body of the mobile communications terminal.

3. A method of performing video communications in a mobile communications terminal, the method comprising the steps of:
detecting a direction of rotation of a folder of a mobile communications terminal upon receipt of a video communication call ;
switching said mobile communications terminal to a first video communication mode, if the detected direction of rotation of the folder is indicative of a position adapted for performing video communications on the mobile communications terminal; and
switching said mobile communications terminal to a second video communication mode allowing transmission of video data to the called party, if a video transmission key is input in the first video communication mode.

4. The method as defined in Claim 3, wherein said position adapted for performing video communications on the mobile communications terminal comprises a position where said folder is rotated to a second folder mode, said second folder mode comprising a crosswise position of the folder with respect to a main body of the mobile communications terminal.

5. The method as defined in Claim 3, wherein said first video communication mode enables reception of video signals and enables transmission and reception of audio signals.

6. The method as defined in Claim 3, wherein said second video communication mode enables the transmission and reception of video signals and audio signals.

7. A method of performing video communications in a mobile communications terminal, the method comprising the steps of:
switching said mobile communication terminal to a first video communication mode, if a communication key is input following receipt of a video communication call;
detecting a direction of rotation of a folder of the mobile communications terminal in the first video communication mode; and
switching said mobile communications terminal to a second video communication mode enabling transmission of video data, if the detected direction of rotation of the folder is indicative of a position adapted for performing transmission of video data from the mobile communications terminal.

8. The method as defined in Claim 7, wherein said position adapted for performing transmission of video data from the mobile communications terminal comprises a position where said folder is rotated to a second folder mode, said second folder mode comprising a crosswise position of the folder with respect to a main body of the mobile communications terminal.

9. The method as defined in Claim 7, further comprising the step of switching said mobile communication terminal to the first video communication mode for disabling the video data transmission if said folder is rotated to the position to block transmission of the video data from the second video communication mode.

10. The method as defined in Claim 9, wherein the mobile communication terminal is switched to the first video communication mode when said folder is rotated to a first folder mode, said first folder mode comprising a lengthwise position of the folder with respect to a main body of the mobile communications terminal.

11. The method as defined in Claim 7, wherein said first video communication mode enables reception of video signals and enables transmission and reception of audio signals.

12. The method as defined in Claim 7, wherein said second video communication mode enables the transmission and reception of video signals and audio signals.

13. A method of performing video communications in a mobile communication terminal, the method comprising the steps of:
upon receipt of a video communication call in a mobile communications terminal, detecting which motion of a folder has been taken to initiate the video communications in the mobile communications terminal;
if the detected motion of said folder comprises rotation to a position for performing the video communications, switching said mobile communication terminal to a first video communication mode;
switching said mobile communication terminal to a second video communication mode to enable transmission of video data, if a key is input for video data transmission in the first video communication mode with said folder turned to the position for performing the video communications;
if the detected motion of said folder comprises a video communication key input, switching said mobile communication terminal to the first video communication mode; and
switching said mobile communication terminal to the second video communication mode to enable transmission of video data, if said folder is rotated to the position for performing the video communications in the first video communication mode set by the input of the video communication key.

14. The method as defined in Claim 13, wherein said mobile communication terminal is switched to the first video communications mode if said folder is rotated to a second folder mode, said second folder mode comprising a crosswise position of the folder with respect to a main body of the mobile communication terminal.

15. The method as defined in Claim 13, wherein said mobile communication terminal is switched to the second video communication mode to enable transmission of the video data if said folder is rotated to a second folder mode, said second folder mode comprising a crosswise position of the folder with respect to a main body of the mobile communication terminal, in the first video communication mode set by the input of the video communication key.

16. The method as defined in Claim 13, wherein said first video communication mode enables reception of video signals and enables transmission and reception of audio signals.

17. The method as defined in Claim 13, wherein said second video communication mode enables transmission and reception of video signals and audio signals.

18. A wireless terminal comprising:
a main body;
a folder rotationally mounted on said main body; and
a folder rotation detector;
wherein, when said folder is rotated to at least one of a first lengthwise position at which said folder is arranged lengthwise with said main body and a second crosswise position at which said folder is arranged crosswise to said main body,
the folder rotation detector detects rotational position of said folder in response to a video telephone call, and
operation of said wireless terminal is switched to a video communication mode if said rotational position is indicative of a demand for the video communication.

19. The wireless terminal as claimed in claim 18, wherein said wireless terminal is switched to said video communication mode when said folder is arranged crosswise to a main body of said terminal.

20. The wireless terminal as claimed in claim 19, wherein said first video communication mode enables at least one of video reception, audio transmission and audio reception.

21. The wireless terminal as claimed in claim 19, wherein said second video communication mode enables at least one of video transmission, video reception, audio transmission and audio reception.
